(19) Europäisches Patentamt

European Patent Office

Office européen des brevets

(11) **EP 1 623 907 A1**

(12) **EUROPEAN PATENT APPLICATION**

(43) Date of publication:
**08.02.2006 Bulletin 2006/06**

(51) Int Cl.:
**B62D 5/04** (2006.01)

(21) Application number: **04103746.6**

(22) Date of filing: **04.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Ford Global Technologies, LLC, A subsidary of Ford
Motor Company
Dearborn, MI 48126 (US)**

(72) Inventors:
• **Wijffels, Lodewijk
  52062, Aachen (DE)**

• **Gussen, Uwe
  52393, Huertgenwald (DE)**
• **Maurice, Jan Pieter
  6461 NA, Kerkrade (NL)**
• **Otto, Carsten
  47119, Duisburg (DE)**
• **Burgio, Gilberto
  52080, Aachen (DE)**

(74) Representative: **Drömer, Hans-Carsten et al
Ford-Werke Aktiengesellschaft,
Patentabteilung NH/DRP,
Henry-Ford-Strasse 1
50725 Köln (DE)**

(54) **Method of estimating the driver's torque**

(57) The Invention relates to a Method to estimate the driver's torque for an Electric Power Assisted Steering System (2). Means are implemented in the Electric Power Assisted Steering System control unit (6) mainly intended as measuring the driver torque and compute the desired assist torque as a function of the first. Means to estimate the driver's torque out of measured mechanic torques and a column angle such that the said estimation is then used to obtain a required assist torque are provided.

Fig. 1

EP 1 623 907 A1

**Description**

The invention relates to a Method of estimating the driver's torque for an Electric Power Assisted Steering System, whereby means are implemented in a Electric Power Assisted Steering System Control Unit mainly intended as measuring the driver torque and compute the desired assist torque as a function of the first.

Electric Power Assisted Steering (EPAS) helps the driver in giving the steering system the torque necessary to steer the vehicle. To do this an electrical actuator is placed in the system that delivers a torque as a function of the driver steering effort.

Known mechanical system (rack assist configuration), consist of motor and pinion subsystems, which respectively are responsible for the actuation and for the measurements for the system.

Sensors measure what is necessary to identify the driver's steering torque, the actuator state and the vehicle state. These measurements are processed every time trigger in the Electronic Control Unit that compute the torque the electric motor has to supply.

The most important functionality implemented in commercial EPAS system control is mainly intended as:

- measuring the current driver torque ($T_d$);
- compute the desired assist torque as a function of the first

$$T_a = k\,f(T_d) \tag{1}$$

where the function f is monotonic increasing and k is a high gain.

Due to the high gain, a big percentage of the steering effort is given by the assist device and a small percentage is given by the driver (ratio assist/driver about 5/1, peak values of 20/1).

The problem is that the driver torque ($T_d$) is often not measured where it is applied, i.e. on the steering wheel, but in a point far from it, at the pinion ($T_m$). The two values will differ due to dynamic phenomena involved in the steering column, that is the motion of the column shaft, the 2 u-joints and the NVH coupling. Only in steady state condition the two values will be the same.

In general:

$$T_d = T_m + F_c^{-1}(s)\theta_c \tag{2}$$

where $_c$ is the column angle (measured in the pinion for instance) and $F_c(s)$ is the transfer function that describe the linearised dynamic behavior of the column subsystem (i.e. the subsystem between driver and pinion)

$$\theta_c = F_c(s)(T_d - T_m) \tag{3}$$

Actual implementations assume

$$T_d = T_m \tag{4}$$

and requires additional parallel compensations of friction and inertia phenomena, that can occur anywhere in the steering system (electrical actuator,...).

The basic assist function depends on the torque sensor measurement ($T_m$).

Moreover, some estimation of dynamic effects due to friction and inertia in the column can be easily done on line using the column angle's first and second time derivatives and multiplying them respectively for the nominal viscous friction and nominal inertia values:

$$F_c^{-1}(\theta_c) = K_f\dot{\theta}_c + J\ddot{\theta}_c \tag{5}$$

This computation is affected by problems of noise and uncertainties on the parameter values. The friction model is moreover very difficult to be identified, in an always-valid form.

It is an object of the invention to improve the dependency of the assist torque from the driver's effort, so that the driver will better lead the assist torque delivery.

Inventionally this object is solved by means to estimate the driver's torque out of measured mechanic torques and a column angle such that said estimation is then used to obtain a required assist torque.

With the Method an estimation of the driver torque is proposed, with the possibility of using it in eq. (1) and obtain a better driver Basic Assist Function.

An observer-based structure is presented to estimate the driver torque, out of the measured mechanic i.e. pinion torque $(T_m)$ and column angle ($_c$).

The observer based technique to estimate the driver torque, in comparison with the inversion method in (5), has the big advantage of not having the noise problem and of being robust against model/parameters inaccuracies due to the feedback structure.

A better understanding of the present invention will be obtained by reading the following detailed description of the invention in conjunction with the accompanying drawings, in which:

Fig.1      shows a perspective view of a mechanical system,

Fig. 2      shows an overall structure of the inventional observer.

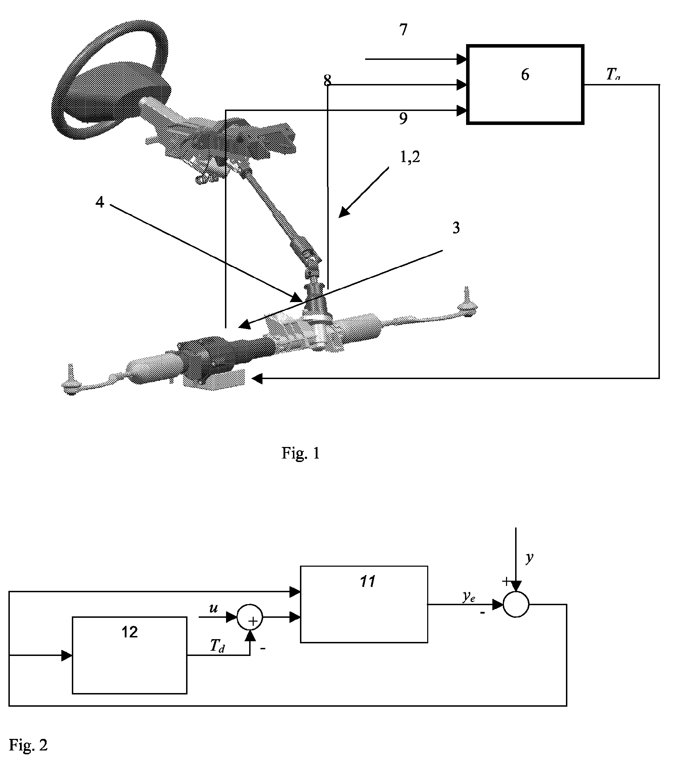

Figure 1 shows a steering device 1 as a mechanical system (rack assist configuration) with an Electric Power Assisted Steering System 2, which is called EPAS-System in the following. The EPAS-System has an electric motor 3 and pinion subsystems 4 which respectively are responsible for the actuation and the measurements for the System. An Electric Control Unit 6 (ECU) containing power electronics is attached to the EPAS-System 2. Environment/vehicle measurements (arrow 7) are put into the control Unit 6 as well as pinion torques $(T_m)$ (arrow 8) and other measurements (arrow 9).

The main measurements are in general:

- pinion torque ($T_m$);
- pinion position/velocity;
- electric motor currents;
- vehicle speed.

The electrical part of the EPAS system is composed by:

- sensors;
- one actuator;
- electronic control unit;
- power electronics.

The sensors measure what is necessary to identify the driver's steering torque, the actuator state and the vehicle state. These measurements are processed every time trigger in the Electronic Control Unit that computes the torque the electric motor has to supply in order to obtain:

- pleasant steering feel for the driver;
- an accurate steering performance.

The most important functionality implemented in commercial EPAS system control is mainly intended as:

- measuring the current driver torque ($T_d$);
- compute the desired assist torque as a function of the first

$$T_a = k\, f(T_d) \hspace{4cm} (1)$$

where the function $f$ is monotonic increasing and $k$ is a high gain.

The column model is:

$$(T_d - T_m) = K_f \dot{\theta}_c + J \ddot{\theta}_c \qquad\qquad (6)$$

where we can measure $\theta_c(t)$ and $T_m(t)$, $T_d(t)$ is what we want to estimate.

We consider the driver torque $T_d$, to be an unknown variable, and we model it according to:

$$T_d^{(n)} = 0 \qquad\qquad (7)$$

for some value of n, where the above notation indicated the n-th time derivative of the driver torque. This is reasonable to be true, due to the fact that $T_d$, as being physically generated by the driver, is a smooth continuous signal: so it can be locally approximated with its Taylor series expansion till the order (n-1).

We can now rewrite the eq. (6) and (7) and rename $T_d$ (which becomes a state) in the following in state space description:

$$\theta_c = x_1; \dot{\theta}_c = x_2; T_d = x_3; \dot{T}_d = x_4; \ddot{T}_d = x_5 \ldots\ldots \qquad T_m = u; \qquad \theta_c = y; \qquad (8)$$

$$\begin{cases} \dot{x}_1 = x_2 \\[2mm] \dot{x}_2 = -\dfrac{K_f}{J}x_2 + \dfrac{1}{J}x_3 - \dfrac{1}{J}u \\[2mm] \ldots\ldots \\[2mm] \dot{x}_{k-1} = x_k \\[2mm] \ldots\ldots \\[2mm] \dot{x}_n = 0 \\[2mm] y = x_1 \end{cases} \qquad\qquad (9)$$

i.e.

$$\begin{cases} \dot{X} = AX + Bu \\ y = CX \end{cases} \qquad\qquad (10)$$

$$X = \begin{bmatrix} x_1 \\ x_2 \\ \ldots \\ \ldots \\ x_n \end{bmatrix}; \qquad A = \begin{bmatrix} 0 & 1 & 0 & 0 \ldots. & 0 \\ 0 & -\frac{K_f}{J} & \frac{1}{J} & 0\ldots.0 \\ 0 & 0 & 0 & 1 & 0..0 \\ 0\ldots\ldots\ldots.0 & 1..0 \\ 0\ldots\ldots\ldots.00 \end{bmatrix}; \qquad B = \begin{bmatrix} 0 \\ -\frac{1}{J} \\ 0 \\ \ldots. \\ 0 \end{bmatrix}; \qquad C = \begin{bmatrix} 1 & 0 & 0 & \ldots\ldots. & 0 \end{bmatrix}; \qquad (11)$$

This is the model of column, u-joints, t-bar with additional description of the function $T_d(t)$ according to eq. (7).

We can now design a state observer of this system, using linear techniques. This is described by the following equations:

$$\begin{cases} \dot{X}_e = A_e X_e + B_e U \\ Y = X_e \end{cases} ; \qquad (12)$$

where

$$U = \begin{bmatrix} u \\ y \end{bmatrix}; \quad A_e = A - KC; \quad B_e = [B, K]; \quad K = [k_1\, k_2 \,.....\, k_{n+2}]'$$

With an appropriate turning, the output of the observer will asymptotically track the state of the plant (10), and its 3$^{rd}$ component will estimate the driver torque $T_d$.

The observer gain $K$ and the number of additional states *(n)* are design parameters: the first will determine the bandwidth of the observer (higher bandwidth with higher gain), the second determines the accuracy of the disturbance estimation (more accuracy with higher n, but more computation complexity, too).

The overall structure of the observer can be described with the block diagram shown in Figure 2 wherein the block 11 as Plant State Estimation contains the Plant Model (6) and the block 12 as Driver Torque Estimation contains the driver torque model described above (7).

The above disclosed method is not restricted of applying this in the described EPAS. It is to understand, that the disclosed method is general and can be easily adapted and applied to other EPAS configurations then the one described.

**Claims**

1.  Method to estimate the driver's torque for an Electric Power Assisted Steering System (2), whereby means are implemented in the Electric Power Assisted Steering System control unit (6) mainly intended as measuring the driver torque and compute the desired assist torque as a function of the first,
    **characterized by**
    means to estimate the driver's torque out of measured mechanic torques and a column angle such that said estimation is then used to obtain a required assist torque.

2.  Method according to claim 1,
    **characterized in that**
    said estimation is used in a basis assist function in stead of the measured torque to obtain said required assist torque.

3.  Method according to claim 1 or 2,
    **characterized in that**
    said means to estimate the driver's torque is an observer based technique.

4.  Method according to one of claims 1 to 3,
    **characterized in that**
    said means to estimate the driver's torque are designed by using linear techniques.

5.  Method according to one of the claims 1 to 4,
    **characterized in that**
    said means to estimate the driver's torque consist of a block (11) as Plant State Estimation containing a plant modell and a block (12) as Driver Torque Estimation containing a driver torque Model.

Fig. 1

Fig. 2

**European Patent Office**

## PARTIAL EUROPEAN SEARCH REPORT

**Application Number**

which under Rule 45 of the European Patent Convention EP 04 10 3746
shall be considered, for the purposes of subsequent
proceedings, as the European search report

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 304 275 A (FORD GLOBAL TECH INC) 23 April 2003 (2003-04-23) * page 7, paragraphs 42,45,59-61 * ----- | 1,4 | B62D5/04 |
| X | FR 2 848 173 A (MECANIQUE D IRIGNY SOC D) 11 June 2004 (2004-06-11) * abstract * ----- | 1 | |

**TECHNICAL FIELDS SEARCHED (Int.Cl.7)**

B62D

## INCOMPLETE SEARCH

The Search Division considers that the present application, or one or more of its claims, does/do
not comply with the EPC to such an extent that a meaningful search into the state of the art cannot
be carried out, or can only be carried out partially, for these claims.

Claims searched completely :

Claims searched incompletely :

Claims not searched :

Reason for the limitation of the search:

see sheet C

| Place of search | Date of completion of the search | Examiner |
|---|---|---|
| Berlin | 16 December 2004 | Călămar, G |

**European Patent**
**Office**

**INCOMPLETE SEARCH**
**SHEET C**

Application Number

EP 04 10 3746

Claim(s) searched completely:
    4

Claim(s) searched incompletely:
    1

Claim(s) not searched:
    2,3,5

Reason for the limitation of the search:

The claims are unclear and that renders impossible to determine which parts of the claims may be said to define subject-matter for which protection might legitimately be sought (Article 84 EPC). For these reasons, a meaningful search over the whole breadth of the claims is impossible. Consequently, the search has been restricted to:

1. A method to estimate the driver's torque for an electric power assisted steering system, whereby means are implemented in the electric power assisted steering system control unit measuring the driver torque and computing the desired assist torque as a function of the first and means to estimate the driver's torque out of a column angle such that this estimation is then used to obtain a required assist torque.
2. Means to estimate the driver's torque designed by using linear techniques.

## ANNEX TO THE EUROPEAN SEARCH REPORT
## ON EUROPEAN PATENT APPLICATION NO.

EP 04 10 3746

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2004

| Patent document cited in search report | | Publication date | Patent family member(s) | | Publication date |
|---|---|---|---|---|---|
| EP 1304275 | A | 23-04-2003 | US | 2003079933 A1 | 01-05-2003 |
| | | | EP | 1304275 A1 | 23-04-2003 |
| | | | US | 2004055810 A1 | 25-03-2004 |
| FR 2848173 | A | 11-06-2004 | FR | 2848173 A1 | 11-06-2004 |
| | | | WO | 2004052711 A1 | 24-06-2004 |

EPO FORM P0459

For more details about this annex : see Official Journal of the European Patent Office, No. 12/82